# EUROPÄISCHE PATENTSCHRIFT

(11) **EP 2 984 458 B1**
(45) Veröffentlichungstag und Bekanntmachung des Hinweises auf die Patenterteilung: **28.11.2018**
(21) Anmeldenummer: 14713839.0
(22) Anmeldetag: 28.03.2014
(51) Int. Cl.: G01F 1/58

(54) **VORRICHTUNG ZUM MESSEN EINES FLÜSSIGKEITSFLUSSES**
APPARATUS FOR MEASURING A LIQUID FLOW
DISPOSITIF DE MESURE D'UN FLUX DE LIQUIDE

(30) Priorität: 10.04.2013 DE 102013006142
(43) Veröffentlichungstag der Anmeldung: 17.02.2016
(73) Patentinhaber: Fresenius Medical Care Deutschland GmbH, 61352 Bad Homburg (DE)
(72) Erfinder: HEIDE, Alexander, 65817 Eppstein (DE); NIKOLIC, Dejan, 65812 Bad Soden (DE)
(74) Vertreter: Dreyhsig, Jörg
(86) Internationale Anmeldenummer: PCT/EP2014/056303
(87) Internationale Veröffentlichungsnummer: WO 2014/166762

(56) Entgegenhaltungen:
- EP-A1- 0 762 085
- DE-A1- 3 000 965
- DE-A1- 3 329 899
- DE-A1-102004 022 518
- DE-B- 1 038 769
- US-A- 6 085 599

## Beschreibung

### Technisches Gebiet

Die Erfindung betrifft eine Kombination einer Flüssigkeitspumpe zum Erzeugen eines Flüssigkeitsflusses in einer flüssigkeitsführenden Leitung und eines Flussmessers zum Messen des Flüssigkeitsflusses.

### Hintergrund

Magnetische Flussmesser, die auch als elektromagnetische Flussmesser oder induktive Flussmesser bezeichnet werden, beruhen auf der Messung der Strömungsgeschwindigkeit einer leitfähigen Flüssigkeit durch ein bekanntes oder kontrolliertes magnetisches Feld durch Messung der induzierten elektrischen Spannung. Bei bekanntem Strömungsquerschnitt kann von der Strömungsgeschwindigkeit auf die Flussrate oder den Volumenstrom geschlossen werden, was von dem Begriff des Flüssigkeitsflusses im Folgenden umfasst sein soll. Eine elektrische Spannung entsteht in einem durchströmten Magnetfeld durch eine Ladungstrennung der in einer leitfähigen Flüssigkeit vorliegenden Ionen, die als induzierte Spannung gemessen werden kann. Die Spannungsmessung erfolgt typischerweise, indem die induzierte Spannung an einem Paar von Elektroden, die in elektrischem Kontakt zu der leitfähigen Flüssigkeit stehen, abgeleitet wird. Diese Spannung ist proportional zu der Strömungsgeschwindigkeit und abhängig von der Magnetfeldstärke. Die Ladungstrennung erfolgt in senkrechter Richtung zu der Flussrichtung sowie zu der Richtung des Magnetfeldes. Das Magnetfeld eines magnetischen Flussmessers ist daher vorzugsweise senkrecht zur Flussrichtung in dem entsprechenden Flüssigkeitskanal angeordnet und das Elektrodenpaar zum Ableiten der induzierten elektrischen Spannung ist vorzugsweise senkrecht sowohl zu dem Magnetfeld als auch zur Flussrichtung in dem Flüssigkeitskanal angeordnet.

Ein typischer elektromagnetischer Flussmesser ist aus einer nicht-magnetischen und nicht magnetisierbaren Röhre aufgebaut, die auf der Innenseite mit elektrisch isolierendem Material ausgekleidet ist.

Typischerweise wird das magnetische Feld durch eine oder mehrere außerhalb der flüssigkeitsdurchströmten Röhre angeordnete Spulen erzeugt. Die durch den Flüssigkeitsfluss induzierte elektrische Spannung wird typischerweise durch einen Spannungsmesser bestimmt und das Ergebnis der Spannungsmessung wird einer Auswerteeinheit zugeführt zur Bestimmung des Flüssigkeitsflusses, d.h. der Flussrate oder des Volumenstroms, basierend auf der gemessenen Spannung.

Die an den Elektroden abgeleitete elektrische Spannung ist häufig zusätzlich durch elektrochemische Potentiale beeinflusst oder gestört. Um die durch die elektrochemischen Potentiale verursachten Einflüsse oder Störungen zu kompensieren oder herauszurechnen wird als Magnetfeld in einem elektromagnetischen Flussmesser typischerweise ein Wechselfeld oder ein alternierendes Feld verwendet. Die Verwendung von Permanentmagneten ist in einer solchen Konfiguration daher normalerweise ausgeschlossen.

DE 10 38 769 B, DE 30 00 965 A1, US 6 085 599 A, EP 0 762 085 und DE 33 29 899 A2 offenbaren elektromagnetische Flussmesser zum Messen eines Flüssigkeitsflusses in einer flüssigkeitsführenden Leitung, mit einem Magneten zum Erzeugen eines magnetischen Feldes in der flüssigkeitsführenden Leitung, wobei der Magnet um eine Achse drehbar ist um ein magnetisches Wechselfeld zu erzeugen. DE 10 2004 022518 offenbart eine Kombination aus einem elektromagnetischen Flussmesser und einer Flüssigkeitspumpe, mit einem Elektromotor zum Antrieb der Flüssigkeitspumpe, wobei der selbe Elektromagnet ein magnetisches Wechselfeld für den Flussmesser erzeugt und als Stator des Elektromotors dient.

### Zusammenfassung

Im Einklang mit der vorliegenden Erfindung wird eine Kombination aus einem elektromagnetischen Flussmesser, einer Flüssigkeitspumpe und einem Elektromotor zum Antrieb der Flüssigkeitspumpe angegeben, wobei der Flussmesser angepasst ist zum Messen eines Flüssigkeitsflusses in einer flüssigkeitsführenden Leitung. Der elektromagnetische Flussmesser weist einen Magneten zum Erzeugen eines magnetischen Feldes in der flüssigkeitsführenden Leitung, sowie ein Elektrodenpaar zum Ableiten einer elektrischen Spannung in der flüssigkeitsführenden Leitung auf, wenn die Flüssigkeit durch die flüssigkeitsführende Leitung fließt, zum Bestimmen der Flüssigkeitsflusses basierend auf der gemessenen Spannung. Der Magnet ist um eine Achse drehbar um ein magnetisches Wechselfeld zu erzeugen. Das magnetische Wechselfeld kann einen sinusförmigen oder einen anderen alternierenden Verlauf haben. Die Flüssigkeitspumpe ist angepasst zum Umwälzen von Flüssigkeit in der flüssigkeitsführenden Leitung, und weist einen mit dem drehbaren Magneten verbundenen Pumprotor auf. Der Elektromotor ist angepasst zum Antrieb der Flüssigkeitspumpe und umfasst einen Stator zum Erzeugen eines magnetischen Drehfeldes und einen in dem Drehfeld gelegenen drehbaren Läufer, wobei der Läufer den drehbaren Magneten umfasst. Dies ermöglicht eine besonders kompakte Ausführung des elektromagnetischen Flussmessers und der Flüssigkeitspumpe. Ohnehin vorhandene drehbare Teile innerhalb der Pumpe können so für eine weitere Funktion genutzt werden.

Der drehbare Magnet ist vorzugsweise als Permanentmagnet ausgeführt. Der drehbare Magnet kann auch als Elektromagnet oder mit anderen Worten als magnetisierbare Spule ausgeführt sein, wobei die magnetische Eigenschaft erst im Betrieb auftritt, wenn der Elektromagnet von einem entsprechenden Erregerstrom durchflossen wird.

In einer bevorzugten Ausführungsform umfasst der elektromagnetische Flussmesser einen Spannungsmesser zum Messen der elektrischen Spannung zwischen den Elektroden des Elektrodenpaars und einer Auswerteeinheit zur Bestimmung des Flüssigkeitsflusses in der flüssigkeitsführenden Leitung basierend auf der gemessenen elektrischen Spannung.

In einer weiteren bevorzugten Ausführungsform des elektromagnetischen Flussmessers weist die Auswerteeinheit Mittel zum Bestimmen einer Phasenlage einer Störkomponente der gemessen elektrischen Spannung, Mittel zum Bestimmen eines von der Störkomponente befreiten Signals auf Basis der gemessenen Spannung und der Phasenlage der Störkomponente sowie Mittel zum Bestimmen des Flüssigkeitsflusses auf Basis des von der Störkomponente befreiten Signals. Die Erfinder haben erkannt, dass eine durch das magnetische Wechselfeld erzeugte induzierte und zur Änderung des Magnetfelds proportionale elektrische Spannung auf diese Weise als Störkomponente der gemessenen Spannung eliminiert werden kann, um so ein von einer Störung befreites Signal zu erzeugen. Dieses von der Störung befreite Signal kann dann weiter zur Bestimmung des Flüssigkeitsflusses verwendet werden.

Die Erfinder haben weiterhin erkannt, dass die Phasenlage der Störkomponente bestimmt werden kann, indem die Phasenlage des Drehwinkels des drehbaren Magneten bestimmt wird.

Die Phasenlage des drehbaren Magneten wird vorteilhaft mit einem Hallsensor oder mit einem optischen Drehwinkelsensor bestimmt.

In einer bevorzugten Ausführungsform ist die Flüssigkeitspumpe eine Impellerpumpe und der Pumprotor der Impeller der Impellerpumpe.

In einer weiteren bevorzugten Ausführungsform ist die Flüssigkeitspumpe eine peristaltische Pumpe und der Pumprotor ist der Pumpenkopf der peristaltischen Pumpe.

In einer bevorzugten Ausführungsform ist der elektrische Motor ein Synchronmotor, insbesondere ein Synchronmotor mit einem Permanentmagneten als Läufer. Dies ist eine besonders einfache Ausführungsform des Läufers.

### Kurzbeschreibung der Zeichnungen

Figur 1 zeigt einen Querschnitt durch einen Flussmesser und eine Flüssigkeitspumpe im Einklang mit der offenbarten Lehre.
Figur 2 ist ein Blockdiagram der in Figur 1 dargestellten Auswerteeinheit.
Figur 3 zeigt einen Ausschnitt aus der Darstellung von Figur 1 zusammen einer Darstellung des erzeugten Magnetfelds.
Figur 4 zeigt einen Querschnitt durch eine weitere Flüssigkeitspumpe mit einem Flüssigkeitsmesser, gemäß eines nicht erfindungsgemäßen illustrativen Beispiels.
Figur 5 ist eine Explosionsdarstellung des Flussmessers und der Flüssigkeitspumpe von Figur 1.

### Detaillierte Beschreibung der Zeichnungen

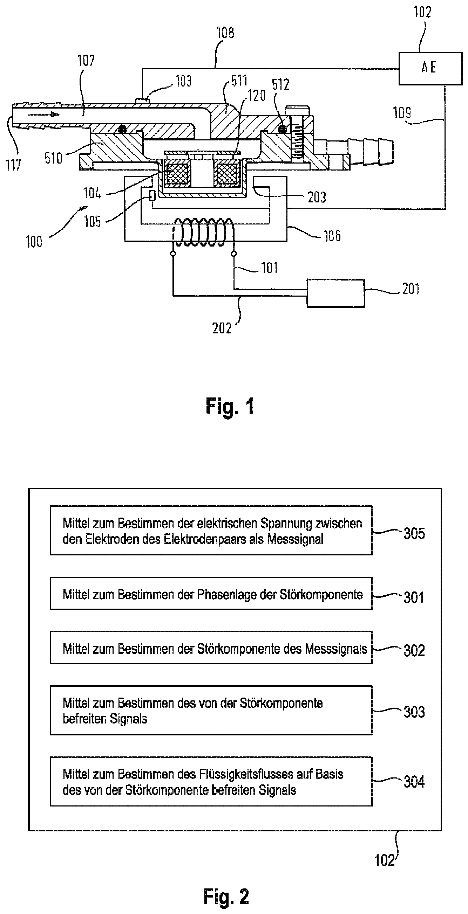

Figur 1 zeigt einen Querschnitt durch eine Flüssigkeitspumpe 100 in die ein Flussmesser im Einklang mit der offenbarten Lehre integriert ist. Die Flüssigkeitspumpe 100 weist einen Flüssigkeitszufluss 117 für die zu pumpende elektrisch leitfähige Flüssigkeit auf. In der dargestellten Ausführungsform umfasst die Pumpe 100 eine obere Pumpenhälfte 511 und eine untere Pumpenhälfte 510, die von einem Dichtring 512 gegeneinander abgedichtet werden. Die zu pumpende Flüssigkeit wird durch einen Pumprotor 120 umgewälzt, in der vorliegenden Ausführung der Flüssigkeitspumpe 100 als Impellerpumpe durch den Impeller 120. Wenn der Impeller 120, wie weiter unten beschrieben wird, in Rotation versetzt wird, entsteht in der zu pumpenden Flüssigkeit eine Druckdifferenz zwischen dem Flüssigkeitszufluss 117 und einem nicht gezeigten Flüssigkeitsabfluss, der Flüssigkeit in einem angeschlossen (nicht dargestellten) Flüssigkeitskreislauf umpumpt, wenn dessen Flusswiderstand ausreichend gering ist. Die offenbarungsgemäße Lehre ist aber auch im Fall einer peristaltischen Pumpe als Flüssigkeitspumpe anwendbar, wobei die Funktion des Impellers als Pumprotor dann durch den Pumpenkopf der peristaltischen Pumpe als Pumprotor ausgeführt würde. Der Impeller 120 ist mit einem vorzugsweise rotationssymmetrisch ausgeführten Magneten 104 fest verbunden, der den Impeller 120 antreibt. Der Magnet 104 ist vorzugsweise als Permanentmagnet ausgeführt, es sind aber auch alternative Ausführungsformen möglich, bei denen der Magnet 104 zum Antrieb des Impellers als magnetisierbare Spule ausgeführt ist, in der erst im Betrieb ein Spulenstrom erzeugt wird, der dann die Magneteigenschaft hervorruft. Der Magnet 104 ist drehbar gelagert, beispielsweise durch ein Magnetkissen als Lager.

Der Magnet 104 befindet sich in einem magnetischen Drehfeld, das von einem Stator erzeugt wird, dessen eine Erregerspule mit einem Eisenkern 106 mit Schenkeln 203 und mit Anschlüssen 101 zum Anlegen einer Wechselspannung dargestellt ist. Insgesamt sind zwei oder mehr, vorzugsweise drei Erregerspulen vorhanden, die phasenversetzt mit einem Wechselstrom beaufschlagt werden um so ein magnetisches Drehfeld zwischen den Schenkeln 203 zu erzeugen. Diese Erregerspulen bilden zusammen den Stator eines Elektromotors. Die Anschlüsse 101 zum Anlegen einer Wechselspannung sind über elektrische Leitungen 202 mit einer vorzugsweise steuerbaren Wechselspannungsquelle 201 verbunden, zum Bereitstellen der zwei oder mehreren phasenversetzten Wechselspannungen. Eine Steuerung der von der Wechselspannungsquelle 201 bereitgestellten Wechsel-spannungen umfasst eine Steuerung der Frequenz und somit der Frequenz der Drehfelds.

Der drehbar gelagerte Magnet 104 bildet den Läufer eines Elektromotors, in einer bevorzugten Ausführungsform den Läufer eines Synchronmotors. In diesem Fall ist die Drehzahl des Elektromotors und somit die Drehzahl des Flüssigkeitspumpe durch eine Steuerung der Frequenz des magnetischen Drehfelds steuerbar.

Der drehbar gelagerte Magnet 104 ist von einem Magnetfeld umgeben, dessen Magnetfeldlinien eine stromab des Flüssigkeitszuflusses 117 gelegene Flüssigkeitsleitung 107 durchstoßen. Auf der Innenseite der Flüssigkeitsleitung 107 ist ein Elektrodenpaar 103 angeordnet. Die Elektroden des Elektrodenpaars 103 können galvanisch mit der Flüssigkeit in der Flüssigkeitsleitung 107 gekoppelt sein oder es kann eine kapazitive Kopplung vorgesehen sein. Die Verbindungslinie zwischen den Elektroden des Elektrodenpaars 103 ist vorzugsweise im Wesentlichen senkrecht sowohl zur Flussrichtung in der Flüssigkeitsleitung 107 als auch senkrecht zu den Feldlinien des den Magneten 104 umgebenden Magnetfeldes. In einer alternativen Ausführungsform können auch mehrere Elektrodenpaare verwendetet werden, etwa um die Messung an mehreren Stellen in der Flüssigkeitsleitung zu ermöglichen, oder um ein Elektrodenpaar an einer nicht von Flüssigkeit durchströmtem Stelle als Referenzelektrodenpaar zur Verfügung zu stellen. Ein Elektrodenpaar kann mit einer Erdungselektrode versehen sein, die ein Erdpotential darstellt. Für mehrere Elektrodenpaare kann eine gemeinsame Erdungselektrode vorgesehen sein.

Wenn eine elektrisch leitfähige Flüssigkeit die Flüssigkeitsleitung 107 durchströmt, entsteht in der Flüssigkeit auf Grund des den Magneten 104 umgebenden Magnetfelds eine Ladungstrennung die als induzierte Spannung an dem Elektrodenpaar abgeleitet werden kann. Die an dem Elektrodenpaar abgeführte Messspannung wird über eine Messleitung 108 der Auswerteeinheit 102 zugeführt.

Durch die Drehbewegung des Magneten 104 ist das den Magneten 104 umgebende Magnetfeld ein Wechselfeld.

Dadurch ist der durch den Flüssigkeitsfluss induzierten Spannung eine weitere induzierte Spannung überlagert, die entsteht, wenn die Adern der Messleitung 108 zusammen mit dem Elektrodenpaar 103 eine Schleife oder mit anderen Worten einen Kreis in dem den Magneten 104 umgebenden Wechselfeld bilden. Diese weitere induzierte Spannung bildet eine Störkomponente der Messspannung.

Die durch das magnetische Wechselfeld induzierte Spannung ist proportional zur Änderung des magnetischen Flusses durch den Kreis oder die Schleife, und somit proportional zur Änderung des den Kreis oder die Schleife durchstoßenden Magnetfeldes. Somit ist die Störkomponente der Messspannung proportional zur Änderung des Magnetfeldes.

Dahingegen ist die durch den Flüssigkeitsfluss induzierte und zwischen den Elektroden gemessene Spannung, mit anderen Worten deren Nutzkomponente proportional zum Magnetfeld, das zwischen den Elektroden herrscht.

Im Fall einer Drehbewegung des Magneten 14 sind somit die Nutzkomponente und die Störkomponente des Messsignals um etwa 90 Grad phasenverschoben, wobei der genaue Winkel der Phasenverschiebung von der Geometrie der Elektroden sowie der Messleitung 108 zur Ableitung der Messspannung abhängt.

Im Einklang mit der vorliegenden Offenbarung wird ein Phasensignal, dass die Phasenlage des Magneten 14 und somit die Phasenlage des den Magneten umgebenden Magnetfelds angibt, verwendet um ein von der Störkomponente befreites Signal zu erzeugen, dass dann zur Bestimmung des Flüssigkeitsflusses, insbesondere zur Bestimmung der Strömungsgeschwindigkeit verwendet werden kann.

Zur Bestimmung der Phasenlage des Magneten 14 ist ein Drehwinkelsensor 105 vorgesehen der über eine Messleitung 109 mit der Auswerteeinheit 102 verbunden ist. Der Drehwinkelsensor ist vorzugsweise als Hallsensor 109 ausgeführt, zum Bestimmen der Phasenlage des den Magneten 14 umgebenden Magnetfeldes und, darauf basierend der Phasenlage oder des Drehwinkels des Magneten 14. Eine alternative Ausführungsform des Drehwinkelsensors 109 ist eine Ausführung als optischer Drehwinkelsensor, wobei etwa ein mit dem drehbaren Magneten 14 verbundenes Streifenmuster optisch ausgewertet wird. Eine weitere Ausführungsform des Drehwinkelsensors 105 umfasst die Verwendung von Spulen zur Bestimmung des Drehwinkels.

Eine Ausgestaltung der Auswerteeinheit 102 zum Erzeugen eines von einer Störkomponente befreiten Signals wird im Zusammenhang mit der Figur 2 näher beschrieben.

Die Auswerteeinheit umfasst einen mit der Messleitung 108 verbundenen Spannungsmesser oder mit anderen Worten: Mittel 305 zum Bestimmen der elektrischen Spannung zwischen den Elektroden des Elektrodenpaars 103 als Messsignal.

Die Auswerteeinheit 102 umfasst weiterhin Mittel zum Bestimmen der Phasenlage der Störkomponente 301. Hierzu kann etwa eine Auswerteeinheit vorgesehen sein zum Auswerten des über die Signalleitung 109 empfangenen Drehwinkelsignals vom Drehwinkelsensor 109.

Ist der Winkel zwischen der Phasenlage des drehbaren Magneten 14 und der Phasenlage der Störkomponente bekannt, so kann von der Phasenlage des drehbaren Magneten 14 auf die Phasenlage der Störkomponente geschlossen werden. Hierzu kann eine Kalibrierungsmessung vorgenommen werden, die etwa eine Messspannung misst, wenn sichergestellt ist, dass keine Flüssigkeit durch die Flüssigkeitsleitung 117 fließen kann, etwa in dem der Flüssigkeitszufluss 117 abgesperrt ist. In diesem Fall entspricht die Phasenlage des Messsignals der Phasenlage der Störkomponente.

Des Weiteren umfasst die Auswerteeinheit 102 Mittel zum Bestimmen eines von der Störkomponente befreiten Signals 303, mit anderen Worten: zum Bestimmen der Nutzkomponente des Messsignals. Hierzu kann das Nutzsignal als periodisches sinusförmiges Signal modelliert werden, wobei die Phasenlage des Nutzsignals um 90 Grad zu der Phasenlage der Störkomponente versetzt ist. Hier ergibt sich das Nutzsignal unmittelbar aus der Kenntnis seiner Frequenz und seiner Phase als entsprechende Phasenkomponente des Nutzsignals. So kann etwa das Nutzsignal durch phasenselektive Gleichrichtung des Messsignals und anschließende Integration über eine Halbwelle erhalten werden, wobei die Halbwelle, in der das Nutzsignal ein positives Vorzeichen aufweist ausgewählt, d.h. selektiert wird und anschließend über die Halbwelle integriert wird. Ein entsprechendes Verfahren ist in den Kapitel 5.3; Durchflussmessung im Wechselfeld in "Strömungs- und Durchflussmesstechnik, Otto Fiedler, Oldenburg Verlag München, 1992", beschrieben, dessen Offenbarung hiermit vollumfänglich in die vorliegende Anmeldung einbezogen wird. Vorteilhaft wird das Nutzsignal noch über mehrere Halbwellen gemittelt.

In einer alternativen Ausführungsform umfasst die Auswerteeinheit 102 weiterhin Mittel zum Bestimmen der Störkomponente des Messsignals 302. Hierzu kann die Störkomponente als periodisches sinusförmiges Signal modelliert werden. Sind Frequenz und Phasenlage der Störkomponente bekannt, wie oben beschrieben, so kann aus dem Messsignal dessen Störkomponente unmittelbar bestimmt werden. Die Störkomponente und ihre Phasenlage können somit unmittelbar in einander überführt werden. Ist die Störkomponente bekannt, so kann sie von dem Messsignal abgezogen werden, um so das von der Störkomponente befreite Signal zu erhalten.

Die Auswerteeinheit umfasst außerdem Mittel zum Bestimmen des Flüssigkeitsflusses 304, insbesondere der Strömungsgeschwindigkeit oder der Flussrate basierend auf dem von der Störkomponente befreiten Signals. Hierzu kann das von der Störkomponente befreite Signal einer weiteren Signalverarbeitung unterzogen werden, etwa um durch elektrochemische Potentiale an den Elektroden verursachte weitere Störeffekte zu berücksichtigen oder zu kompensieren. Hierzu können beispielsweise die positive und die negative Amplitude des Nutzsignals miteinander verglichen werden.

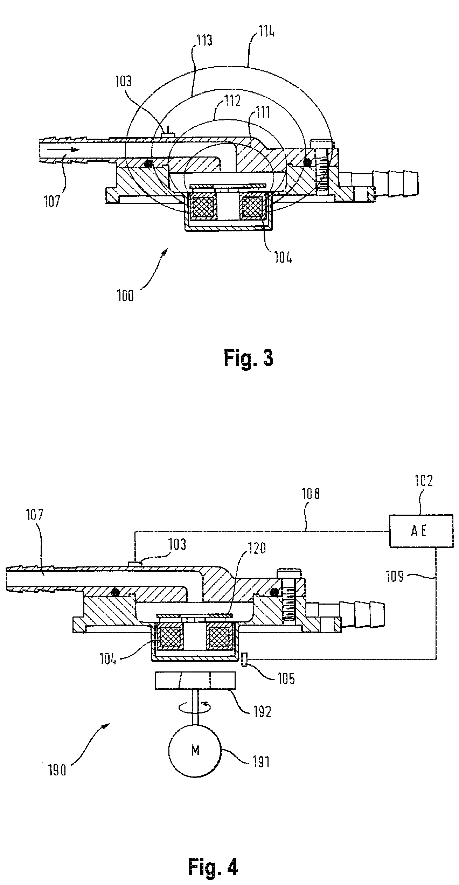

Figur 3 zeigt eine Darstellung der oberen Hälfte der im Zusammenhang mit Figur 1 beschriebenen Flüssigkeitspumpe 100 mit der Flüssigkeitsleitung 107, dem drehbar gelagerten Magneten 104 sowie dem Elektrodenpaar 103, auf deren Beschreibung Bezug genommen wird an Stelle einer Wiederholung.

In der Darstellung der Figur 2 liegt die Verbindungslinie zwischen den Elektroden des Elektrodenpaars senkrecht zur Zeichnungsebene. Die Darstellung der Figur 3 zeigt weiterhin Magnetfeldlinien 111, 112 113, sowie 114 des den drehbar gelagerten Magneten 104 umgebenden Magnetfeldes. Die dargestellten Magnetfeldlinien entsprechen einer Stellung des drehbaren Magneten 104, bei der eine die Pole des Magneten 104 verbindende Linie in horizontaler Richtung in der Zeichenebene verläuft.

In Figur 3 ist erkennbar, dass die Magnetfeldlinien im Bereich des Elektrodenpaars 103 in etwa senkrecht zur Strömungsrichtung in der Flüssigkeitsleitung 107 liegen. Weiterhin ist erkennbar, dass eine die Elektroden des Elektrodenpaars 103 verbindende gedachte Linie in etwa senkrecht sowohl zur Strömungsrichtung in der Flüssigkeitsleitung 107 als auch zu den Magnetfeldlinien des Magnetfelds des Magneten 104.

Figur 4 zeigt eine weitere Ausgestaltung einer Flüssigkeitspumpe mit einem Flüssigkeitsmesser, gemäß eines nicht erfindungsgemäßen illustrativen Beispiels. Der obere Teil der Flüssigkeitspumpe 190 entspricht im Wesentlichen der im Zusammenhang mit Figur 1 beschriebenen Anordnung der Flüssigkeitspumpe 100. Gleiche Bezugszeichen deuten gleiche oder entsprechende Elemente der Flüssigkeitspumpe an, auf deren Beschreibung Bezug genommen wird an Stelle einer Wiederholung. Der wesentliche Unterschied zu der im Zusammenhang mit der Figur 1 beschriebenen Anordnung ist, dass in der Flüssigkeitspumpe 190 ein eine Magnetkupplungshälfte 192 bildender Dauermagnet vorgesehen ist, um ein Drehfeld zu erzeugen, das an den drehbaren Magneten 104 ankoppelt. Der Dauermagnet 192 und der Magnet 104 bilden somit eine erste und eine zweite Hälfte einer Magnetkupplung. Der Antrieb der Magnetkupplung erfolgt durch einen schematisch dargestellten Elektromotor 191.

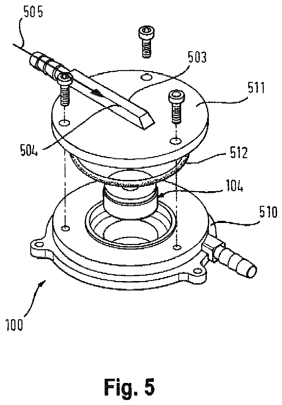

Figur 5 ist eine Explosionsdarstellung des Flussmessers und der in Zusammenhang mit Figur 1 beschriebenen Flüssigkeitspumpe 100. Die Flüssigkeitspumpe weist eine obere Pumpenhälfte 511, in der die in Figur 1 dargestellte Flüssigkeitsleitung 107 ausgebildet ist. In einer unteren Pumpenhälfte 510 ist eine Kammer ausgebildet, die im Betrieb den drehbaren Magneten 104 aufnimmt. Die obere Pumpenhälfte 511 und die untere Pumpenhälfte 510 sind im Betrieb durch den Dichtring 512 gegeneinander abgedichtet. Weiterhin sind Anschlüsse 503 sowie 504 dargestellt, zum Ableiten einer Messspannung von den auf der Unterseite der oberen Pumpenhälfte 511 angebrachten Elektroden des Elektrodenpaars 103. Mit dem Bezugszeichen 505 ist die Flussrichtung in der Flüssigkeitsleitung 107 angedeutet, die vorzugsweise im Wesentlichen senkrecht zu einer die Elektroden des Elektrodenpaars 103 verbindenden gedachten Linie gerichtet ist.

## Patentansprüche

1. Kombination (100) aus einem elektromagnetischen Flussmesser, einer Flüssigkeitspumpe und einem Elektromotor zum Antrieb der Flüssigkeitspumpe, wobei der Flussmesser angepasst ist zum Messen eines Flüssigkeitsflusses in einer flüssigkeitsführenden Leitung (107), mit einem Magneten (104) zum Erzeugen eines magnetischen Feldes (111, 112, 113, 114) in der flüssigkeitsführenden Leitung (107), mit einem Elektrodenpaar (103) zum Ableiten einer elektrischen Spannung, wenn die Flüssigkeit durch die flüssigkeitsführende Leitung (107) fließt, zum Bestimmen des Flüssigkeitsflusses basierend auf der gemessenen Spannung, wobei der Magnet (104) um eine Achse drehbar ist um ein magnetisches Wechselfeld zu erzeugen, wobei die Flüssigkeitspumpe angepasst ist zum Umwälzen von Flüssigkeit in der flüssigkeitsführenden Leitung (107), und einen mit dem drehbaren Magneten (104) verbundenen Pumprotor (120) aufweist, und wobei der Elektromotor angepasst ist zum Antrieb der Flüssigkeitspumpe und einen Stator (106, 203) zum Erzeugen eines magnetischen Drehfeldes und einen in dem Drehfeld gelegenen drehbaren Läufer umfasst, und wobei der Läufer den drehbaren Magneten (104) umfasst.

2. Kombination aus einem elektromagnetischen Flussmesser, einer Flüssigkeitspumpe und einem Elektromotor nach Anspruch 1, wobei der drehbare Magnet (104) ein Permanentmagnet ist.

3. Kombination aus einem elektromagnetischen Flussmesser, einer Flüssigkeitspumpe und einem Elektromotor nach Anspruch 1, wobei der drehbare Magnet eine magnetisierbare Spule umfasst.

4. Kombination aus einem elektromagnetischen Flussmesser, einer Flüssigkeitspumpe und einem Elektromotor nach einem der vorangehenden Ansprüche mit einem Spannungsmesser zur Messen der elektrischen Spannung zwischen den Elektroden des Elektrodenpaars und einer Auswerteeinheit (102) zur Bestimmung des Flüssigkeitsflusses in der flüssigkeitsführenden Leitung basierend auf der bestimmten elektrischen Spannung.

5. Kombination aus einem elektromagnetischen Flussmesser, einer Flüssigkeitspumpe und einem Elektromotor nach Anspruch 4, enthaltend Mittel (301) zum Bestimmen der Phasenlage einer Störkomponente der gemessen elektrischen Spannung, Mittel (303) zum Bestimmen eines von der Störkomponente befreiten Signals auf Basis der gemessenen Spannung sowie Mittel (304) zum Bestimmen des Flüssigkeitsflusses auf Basis des von der Störkomponente befreiten Signals.

6. Kombination aus einem elektromagnetischen Flussmesser, einer Flüssigkeitspumpe und einem Elektromotor nach Anspruch 5, wobei die Mittel zum Bestimmen der Phasenlage (105) Mittel zum Bestimmen des Drehwinkels des drehbaren Magneten umfassen.

7. Kombination aus einem elektromagnetischen Flussmesser, einer Flüssigkeitspumpe und einem Elektromotor nach Anspruch 6, wobei die Mittel zum Bestimmen des Drehwinkels (105) einen Hallsensor umfassen.

8. Kombination aus einem elektromagnetischen Flussmesser, einer Flüssigkeitspumpe und einem Elektromotor nach Anspruch 6, wobei die Mittel zum Bestimmen des Drehwinkels einen optischen Drehwinkelsensor umfassen.

9. Kombination aus einem elektromagnetischen Flussmesser, einer Flüssigkeitspumpe und einem Elektromotor nach einem der vorangehenden Ansprüche, wobei die Flüssigkeitspumpe eine Impellerpumpe ist und der Pumprotor (120) der Impeller der Impellerpumpe.

10. Kombination aus einem elektromagnetischen Flussmesser, einer Flüssigkeitspumpe und einem Elektromotor nach einem der Ansprüche 1 - 8, wobei die Flüssigkeitspumpe eine peristaltische Pumpe ist und der Pumprotor der Pumpenkopf der peristaltischen Pumpe.

11. Kombination aus einem elektromagnetischen Flussmesser, einer Flüssigkeitspumpe und einem Elektromotor nach einem der vorangehenden Ansprüche, wobei der elektrische Motor ein Synchronmotor ist.

## Claims

1. A combination (100) of an electromagnetic flowmeter, a liquid pump and an electric motor for driving the liquid pump, wherein the flowmeter is adjusted for measuring a liquid flow in a liquid-carrying line (107),
having a magnet (104) for generating a magnetic field (111, 112, 113, 114) in the liquid-carrying line (107), having an electrode pair (103) for tapping an electric voltage when the liquid flows through the liquid-carrying line (107),
for determining the liquid flow based on the measured voltage,
wherein the magnet (104) is rotatable about an axis to generate a magnetic alternating field,
wherein the liquid pump is adjusted for circulating liquid in the liquid-carrying line (107),
and having a pump rotor (120) connected to the rotating magnet (104), and
wherein the electric motor is adjusted for driving the liquid pump and comprises a stator (106, 203) for generating a magnetic rotating field and a rotating rotor situated in the rotating field, and wherein the rotor comprises the rotating magnet (104).

2. The combination of an electromagnetic flowmeter, a liquid pump and an electric motor according to claim 1,
wherein the rotating magnet (104) is a permanent magnet.

3. The combination of an electromagnetic flowmeter, a liquid pump and an electric motor according to claim 1,
wherein the rotating magnet comprises a magnetizable coil.

4. The combination of an electromagnetic flowmeter, a liquid pump and an electric motor according to any one of the preceding claims, having a voltage meter for measuring the electric voltage between the electrodes of the electrode pair and an evaluation unit (102) for determining the liquid flow in the liquid-carrying line based on the electric voltage determined.

5. The combination of an electromagnetic flowmeter, a liquid pump and an electric motor according to claim 4, containing means (301) for determining the phase position of an interfering component of the measured electric voltage, means (303) for determining a signal freed of the interfering component, based on the measured voltage, as well as means (304) for determining the liquid flow based on the signal freed of the interfering component.

6. The combination of an electromagnetic flowmeter, a liquid pump and an electric motor according to claim 5,
wherein the means for determining the phase position (105) comprise means for determining the angle of rotation of the rotary magnet.

7. The combination of an electromagnetic flowmeter, a liquid pump and an electric motor according to claim 6,
wherein the means for determining the angle of rotation (105) comprise a Hall sensor.

8. The combination of an electromagnetic flowmeter, a liquid pump and an electric motor according to claim 6,
wherein the means for determining the angle of rotation comprise an optical angle of rotation sensor.

9. The combination of an electromagnetic flowmeter, a liquid pump and an electric motor according to any one of the preceding claims, wherein the liquid pump is an impeller pump, and the pump rotor (120) is the impeller of the impeller pump.

10. The combination of an electromagnetic flowmeter, a liquid pump and an electric motor according to any one of claims 1-8,
wherein the liquid pump is a peristaltic pump, and the pump rotor is the pump head of the peristaltic pump.

11. The combination of an electromagnetic flowmeter, a liquid pump and an electric motor according to any one of the preceding claims,
wherein the electric motor is a synchronous motor.

## Revendications

1. Combinaison (100) d'un débitmètre électromagnétique, d'une pompe à liquide et d'un moteur électrique pour l'entraînement de la pompe à liquide, le débitmètre étant adapté pour mesurer un flux de liquide dans une conduite de liquide (107), comportant un aimant (104) pour générer un champ magnétique (111,112,113,114) dans la conduite de liquide (107), une paire d'électrodes (103) pour dériver une tension électrique lorsque le liquide s'écoule dans la conduite de liquide (107), pour déterminer le flux de liquide à partir de la tension mesurée, l'aimant (104) pouvant tourner autour d'un axe afin de générer un champ alternatif magnétique, la pompe à liquide étant adaptée pour brasser du liquide dans la conduite de liquide (107), et un rotor de pompe (120) connecté à l'aimant rotatif (104), le moteur électrique étant adapté pour entraîner la pompe à liquide, et un stator (106,203) pour générer un champ rotatif magnétique et un rotor rotatif situé dans le champ rotatif, le rotor englobant l'aimant rotatif (104).

2. Combinaison d'un débitmètre électromagnétique, d'une pompe à liquide et d'un moteur électrique selon la revendication 1, dans laquelle l'aimant rotatif (104) est un aimant permanent.

3. Combinaison d'un débitmètre électromagnétique, d'une pompe à liquide et d'un moteur électrique selon la revendication 1, dans laquelle l'aimant rotatif comprend une bobine magnétisable.

4. Combinaison d'un débitmètre électromagnétique, d'une pompe à liquide et d'un moteur électrique selon une des revendications précédentes, comportant un mesureur de tension pour mesurer la tension électrique entre les électrodes de la paire d'électrodes et une unité d'exploitation (102) pour déterminer le flux de liquide dans la conduite de liquide à partir de la tension électrique définie.

5. Combinaison d'un débitmètre électromagnétique, d'une pompe à liquide et d'un moteur électrique selon la revendication 4, comportant des moyens (301) de définition de la position de phase d'un composant de perturbation de la tension électrique mesurée, des moyens (303) de détermination d'un signal libéré par le composant de perturbation sur la base de la tension mesurée, de même que des moyens (304) de détermination du flux de liquide sur la base du signal libéré par le composant de perturbation.

6. Combinaison d'un débitmètre électromagnétique, d'une pompe à liquide et d'un moteur électrique selon la revendication 5, dans laquelle les moyens de détermination de la situation de phase (105) comprennent des moyens de détermination de l'angle de rotation de l'aimant rotatif.

7. Combinaison d'un débitmètre électromagnétique, d'une pompe à liquide et d'un moteur électrique selon la revendication 6, dans laquelle les moyens de détermination de l'angle de rotation (105) comprennent un capteur à effet Hall.

8. Combinaison d'un débitmètre électromagnétique, d'une pompe à liquide et d'un moteur électrique selon la revendication 6, dans laquelle les moyens de détermination de l'angle de rotation comprennent un capteur optique d'angle de rotation.

9. Combinaison d'un débitmètre électromagnétique, d'une pompe à liquide et d'un moteur électrique selon une des revendications précédentes, dans laquelle la pompe à liquide est une pompe à turbine et le rotor de pompe (120) la turbine de la pompe à turbine.

10. Combinaison d'un débitmètre électromagnétique, d'une pompe à liquide et d'un moteur électrique selon une des revendications 1 à 8, dans laquelle la pompe à liquide est une pompe péristaltique et le rotor de de la tête de pompe de la pompe péristaltique.

11. Combinaison d'un débitmètre électromagnétique, d'une pompe à liquide et d'un moteur électrique selon une des revendications précédentes, dans laquelle le moteur électrique est un moteur synchrone.
